# EUROPEAN PATENT SPECIFICATION

(11) **EP 2 003 917 B1**
(45) Date of publication and mention of the grant of the patent: **28.11.2012**
(21) Application number: 07720470.9
(22) Date of filing: 20.03.2007
(51) Int. Cl.: H04M 15/00, H04W 4/24

(54) **DECIDING METHOD AND SYSTEM FOR SERVICE INFORMATION IN MOBILE COMMUNICATION SYSTEM**
ENTSCHEIDUNGSVERFAHREN UND SYSTEM FÜR DIENSTINFORMATIONEN IN EINEM MOBILKOMMUNIKATIONSSYSTEM
PROCÉDÉ ET SYSTÈME DE DÉCISION CONCERNANT L'INFORMATION SUR LES SERVICES DANS UN SYSTÈME DE COMMUNICATION MOBILE

(30) Priority: 31.03.2006 CN 200610025346
(43) Date of publication of application: 17.12.2008
(73) Proprietor: Huawei Technologies Co., Ltd., Longgang District, Shenzhen Guangdong 518129 (CN)
(72) Inventor: HU, Huadong, Shenzhen Guangdong 518129 (CN); DUAN, Xiaoqin, Shenzhen Guangdong 518129 (CN); SUN, Chengzhen, Shenzhen Guangdong 518129 (CN)
(74) Representative: Kreuz, Georg Maria
(86) International application number: PCT/CN2007/000896
(87) International publication number: WO 2007/112657

(56) References cited:
- EP-A- 1 622 304
- WO-A-2004/029854
- WO-A1-2005/104519
- WO-A1-2005/109938
- US-A1- 2004 223 602
- "TS 23.203, Policy and charging control architecture, Release 7" 3RD GENERATION PARTNERSHIP PROJECT (3GPP); TECHNICALSPECIFICATION (TS), XX, XX, vol. 23.203, no. V0.3.1, 1 January 2006 (2006-01-01), pages 1-45, XP002408127

## Description

This application claims a priority from Chinese Patent Application No. 200610025346.2, filed with the Chinese Patent Office on March 31, 2006, entitled "SERVICE INFORMATION DECISION METHOD IN MOBILE COMMUNICATION SYSTEM".

### Field of the Invention

The present invention relates to the technical field of mobile communications, and in particular to a service information decision method and system in a mobile communication system.

### Background of the Invention

An accurate, timely and comprehensive control is required for services and resources for the services in a communication system. Policy and Charging Control (PCC) mechanism is one of implementing manners for such a control.

In the architecture of Release 7 of the 3^{rd} Generation Partnership Project, TS 23.203, Vo.5.0, policy and charging function is accomplished by a PCC infrastructure. The PCC infrastructure is a functional infrastructure applicable to multiple access technologies, such as typical access technologies of UMTS Terrestrial Radio Access Network (UTRAN), GSM/EDGE Radio Access Network (GERAN), and Interworking WLAN (I-WLAN).

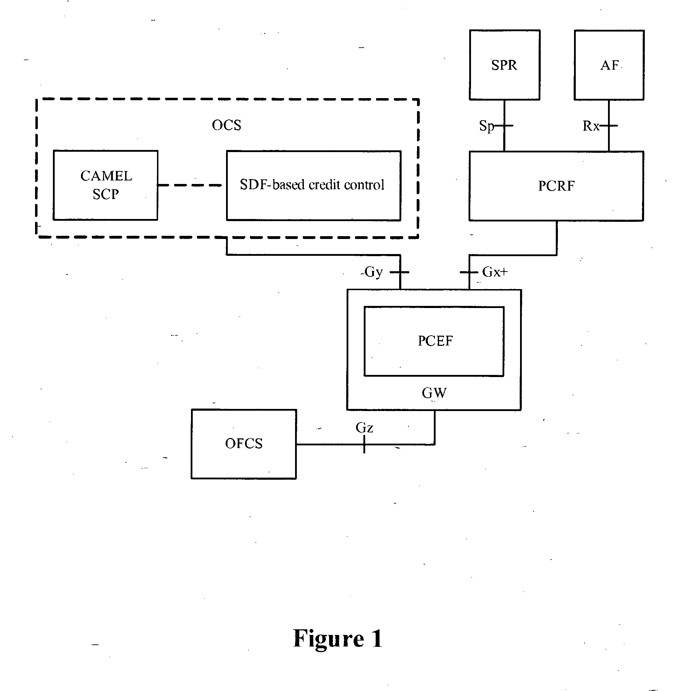

In the architectures prior to Release 7, the policy control is accomplished through a Service Based Local Policy (SBLP), and the charging is accomplished through Flow Based Charging (FBC). However, in the architecture of Release 7, basic functions of the SBLP and the FBC are incorporated into the PCC with further evolvements in some aspects. For example, a policy and charging control based upon user subscription data is implemented and a binding mechanism is updated in the PCC infrastructure in the architecture of Release 7. A basic PCC infrastructure is illustrated in Figure 1.

There are two major functions implemented in the PCC infrastructure. One is the policy control function, and the other is the charging control function.

Specifically, the policy control function further includes supervising the negotiation procedure of service parameters for a user (such as Quality of Service (QoS)), authorizing the network bearer resource used in the service in accordance with obtained service information, controlling the passing of the service flow in the data bearer plane in a real time manner, notifying the data bearer plane of a relevant change of the service plane, notifying the service plane of a relevant change of the data bearer plane, and performing a policy control based upon the user subscription data.

In the PCC infrastructure, the policy control function primarily involves function entities of an Application Function (AF), a Policy and Charging Rules Function (PCRF), a Policy and Charging Enforcement Function (PCEF), and a Subscription Profile Repository (SPR).

The charging control function further includes three aspects: making PCC decisions based on service information, bearer information, and subscription data; correlating the charging data in the service plane and the charging data in the bearer plane; and performing credit control in a dynamic charging mode.

Similarly, in the PCC infrastructure, the charging function primarily involves logic entities of AF, PCRF, PCEF, SPR, and further involves an Online Charging System (OCS) and an Offline Charging System (OFCS).

Specifically, the AF is adapted to provide an access point for service application. A dynamic policy control is required for the network resource used in the service application. During the negotiation of parameters in the service plane, the AF sends relevant service information to the PCRF. If the service information is consistent with the policy of the PCRF, the PCRF accepts the negotiated service parameters; otherwise, the PCRF rejects the negotiation, and may provide in a response service parameters acceptable to the PCRF. Thereafter, the AF may return these parameters to a User Equipment (UE). The interface between the AF and the PCRF is an Rx interface. Particularly in an Internet Protocol Multimedia Subsystem (IMS), the AF is a Proxy-Call Session Control Function (P-CSCF).

The PCRF, as the core of the PCC architecture, is responsible for making PCC decisions. The PCRF provides Service Data Flow (SDF)-based rules for network control. The network control includes detection of SDF, gating, QoS control, flow-based charging control, etc. The PCRF sends its defined policy and charging rules to the PCEF for enforcement, and also ensures that these rules are consistent with the user subscription data. Particularly, the PCRF defines the policy and charging rules depending on service-related information obtained from the AF, information related to the user subscription data, which is obtained from the SPR, and information related to the IP-CAN (IP Connectivity Access network) session, which is obtained from the PCEF.

The PCEF is adapted to enforce in the bearer plane the policy and charging rules provided by the PCRF. First, the PCEF detects the SDFs based on flow filters in the rules sent from the PCRF, and enforces the policy and charging control defined by the PCRF on the service flows. When a bearer is established, the PCEF performs a QoS authorization in accordance with the rules sent from the PCRF, and performs a gating operation in accordance with an instruction from the AF. In accordance with charging rules sent from the PCRF, the PCEF performs a corresponding charging operation on the service flow. This charging operation may be an online charging operation or an offline charging operation. In the case of online charging operation, the PCEF and the OCS operate together for a credit management. In the case of offline charging operation, the PCEF and the OFCS exchange relevant charging information. Particularly, the interface between the PCEF and the PCRF is a Gx interface, the interface between the PCEF and the OCS is a Gy interface, and the interface between the PCEF and the OFCS is a Gz interface. The PCEF is typically located on a GateWay (GW) of the network, such as the Gateway GPRS Support Node (GGSN) in General Packet Radio Service (GPRS) and the Packet Data Gateway (PDG) in I-WLAN.

The SPR, a database of user subscription profiles, stores user subscription data relevant to the policy control and charging. For example, the user subscription data may be, such as service information available to a user, QoS information available to the user service, charging-related user subscription data, and a class of a group of users. With the information stored in the SPR, the PCRF can perform policy control and charging operations based upon the user subscription data. Particularly, the interface between the SPR and the PCRF is an Sp interface.

The OCS and the PCEF operate together to perform the credit control in the online charging mode. During the bearer establishment, modification and termination process, the PCEF shall perform a credit authentication at the OCS. The result of the credit authentication will influence directly the use of user service. For example, if the user credit has been exhausted, the data bearer used for the service is removed immediately, thereby terminating the user service. OFCS and the PCEF operate together to accomplish the charging control in the offline charging mode.

In the PCC mechanism, upon receiving dynamic service information provided by the AF, the PCRF firstly compares the service information with the policy rules defined on the PCRF by an operator. If the service information and the policy rules are consistent with each other, the PCRF accepts and stores the service information for subsequent defining of the policy control and charging rules. If the service information and the policy rules are not consistent with each other, the PCRF rejects the service information provided by the AF, and specifies its supported service information in a response message fed back to the AF. In this case, the AF rejects the establishment of a service with the UE at the application level, and possibly forwards the acceptable service information fed back from the PCRF to the corresponding UE.

Moreover, the PCC mechanism is designed for the purpose of supporting various access systems. In compliance with the specification, the PCRF can feed back service parameter information. Consequently, some access systems are actually not capable of receiving the service parameter information fed back from the PCRF.

In the practical applications, the existing service information decision mechanism is defective.

This is due to that the existing service information decision mechanism of the PCRF does not take into account the user subscription data in the SPR. The user subscription data is very important for obtaining knowledge of services available to a user and of how many QoS resources are available to the services. However, in the existing mechanism, the PCRF makes a reference to the SPR information only in the subsequent bearer establishment process. If the QoS resource offered by the PCRF is not consistent with the QoS information of the AF service, which was confirmed previously by the PCRF, after making a reference to the SPR information during the bearer establishment, then as a result, the UE may have to reinitiate the negotiation of parameters at the service level, which increases the number of service negotiations, and reduces the efficiency of service negotiations, thereby degrading the performance of the system. Therefore, there is a need that the user subscription data in the SPR shall be taken into account in the service information decision mechanism of the PCRF.

3GPP TS 23.203 (policy and charging control architecture, release 7, section 7.4.1) discloses a method of IP-CAN session modification, the method mainly comprise: the AF provides service information to the PCRF due to AF session signaling, the PCRF stores the service information and replies with the acknowledgement to the AF, The PCRF may fetch the subscription related information from the SPR, if the PCRF does not have it, then SPR replies with the subscription related information, and the PCRF stores the information, The PCRF makes the authorization and policy decision.

EP 1622304 A1 discloses a method for selecting a charging rule in connection with subscriber, the method comprises: Application function (AF) provides Charging Rule Function (CRF) with the service information and user information used for selecting a charging rule; CRF selects a charging rule for said subscriber based on the user information and service information.
WO 2004/029854 A2 discloses a method for the providing of services to user equipment, which comprises providing from a database to a policy decision entity subscriber information regarding permitted conditions for the users to obtain the services; providing service information from at least one network or server, regarding service offered by the at least one network or server to the user equipment, forming policy rules at the policy decision entity based upon the subscriber information and the service information.
US 2004223602 A1 discloses an improved mechanism for dynamically managing and controlling connection parameters for a packet based communication connection using at least one type of service.

Furthermore, some access systems are actually not capable of receiving the service parameter information fed back from the PCRF, which influences the readability of a standard and the implementation of subsequent products. Therefore, such a mechanism that determines whether the PCRF feeds back the service parameter information to the AF is defective.

### Summary of the Invention

An embodiment of the present invention provides a service information decision method in a mobile communication system, which can improve the existing service information decision mechanism and the performance of the system.

An embodiment of the present invention provides a service information decision method for a mobile communication system, including:

receiving, by a policy and charging rules function, service parameter information of a user sent from an application function;

obtaining, by the policy and charging rules function, subscription data of the user;

deciding, by the policy and charging rules function, whether to support the service parameter information of the user provided from the application function by using the user subscription data as one of reference criteria.

Another embodiment of the present invention provides a service information decision system for a mobile communication system, including:

a policy and charging rules function in communication with an application function; wherein:

the policy and charging rules function is adapted to receive service parameter information of a user sent from an application function, obtain subscription data of the user and decide whether to support the service parameter information of the user provided by the application function by using the user subscription data as one of reference criteria.

In the solutions provided according to the embodiments of the invention, the application function notifies the policy and charging rules function of whether the application function is capable of receiving fed back service information, and provides the service parameter information of the user to the policy and charging rules function. If the policy and charging rules function does not support the service parameter information and the application function is capable of receiving fed back service information, the policy and charging rules function returns its supported service information to the application function. However, in the service information decision mechanism of the prior art, the decision on whether the PCRF feeds back the service information to the AF is not made differently in accordance with the capability of the application function. Consequently, the technology of the invention can improve the existing service information decision mechanism.

The application function provides the service parameter information of the user to the policy and charging rules function, and the policy and charging rules function uses the user subscription data as one of reference criteria to decide whether to support the service parameter information. Therefore, it is possible to avoid the problem in the existing service information decision mechanism, i.e., the PCRF uses the user subscription data only in a data bearer establishment, which may cause a terminal to reinitiate a negotiation of the service parameter information. The existing service information decision mechanism can be improved and the system performance can be enhanced by using the user subscription data as one of decision criteria in the policy and charging rules function.

### Brief Description of the Drawings

Figure 1 is a schematic diagram of a general PCC infrastructure in the prior art;

Figure 2 is a flow chart of a service information decision method in a mobile communication system according to a first embodiment of the invention; and

Figure 3 is a flow chart of a service information decision method in a mobile communication system according to a second embodiment of the invention.

### Detailed Description of the Invention

The invention is described in further detail with reference to the drawings to make the objects, technical solutions and advantages clearer.

According to the invention, an AF in a mobile communication system notifies a PCRF of whether the AF is capable of receiving fed back service information; and if the PCRF needs to feed back its accepted service information to the AF, the PCRF may make a feedback decision in accordance with the feed back reception capability of the AF. Furthermore, when the AF provides service parameter information of a user to the PCRF, the user subscription data obtained from an SPR is used as one of reference criteria for the PCRF to decide whether to accept the service parameter information provided by the AF.

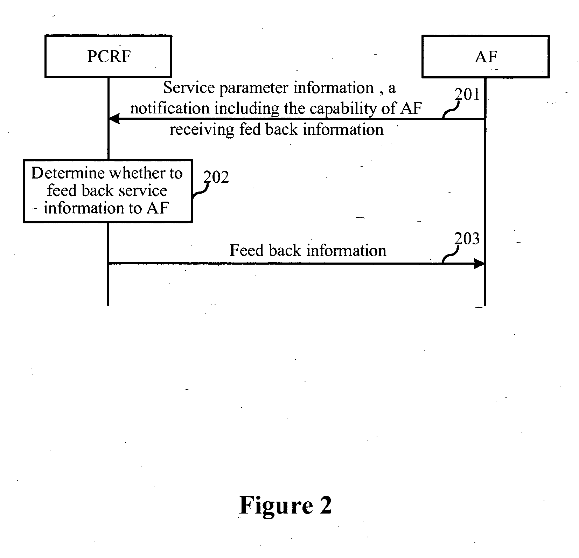

A service information decision method in a mobile communication system according to a first embodiment of the invention is illustrated in Figure 2. The method specifically includes the following steps:

In step 201, an AF notifies a PCRF of whether the AF is capable of receiving fed back service information, and sends service parameter information of a user to the PCRF.

There is a plurality of means for notifying the PCRF. One means is that the AF notifies, in different messages, the PCRF of the service parameter information and whether the AF is capable of receiving fed back service information, respectively. Another means is that the AF notifies, in a message carrying service parameter information, the PCRF of whether the AF is capable of receiving fed back service information. Specifically, a predefined identifier may be set in the message carrying service parameter information to indicate whether the AF is capable of receiving fed back service information. For example, if the message contains the predefined identifier, the PCRF determines that the AF is incapable of receiving fed back service information, while if the message does not contain the predefined identifier, the PCRF determines by default that the AF is capable of receiving fed back service information.

In step 202, the PCRF determines the content of a message fed back to the AF in accordance with the service parameter information and whether the AF is capable of receiving fed back service information, as received from the AF.

If the PCRF decides that the service parameter information from the AF is not accepted and the AF is capable of receiving fed back service information, the fed back message contains service parameter information which can be accepted by the PCRF.

If the PCRF decides that the service parameter information from the AF is not accepted and the AF is not capable of receiving fed back service information, the fed back message contains no service parameter information which can be accepted by the PCRF.

If the PCRF decides that the service parameter information from the AF is accepted, the fed back message is transmitted as in an existing processing method.

In step 203, the PCRF transmits the determined fed back message to the AF.

In the above solution, the PCRF determines whether to feed back the service parameter information which can be accepted by the PCRF if the service parameter information is not accepted, in accordance with whether the AF is capable of receiving fed back service information. However, in the service information decision mechanism according to the prior art, the decision on whether the PCRF feeds back the service information to the AF is not made differently in accordance with the capability of the AF. Consequently, the technology of the present invention can improve the existing service information decision mechanism.

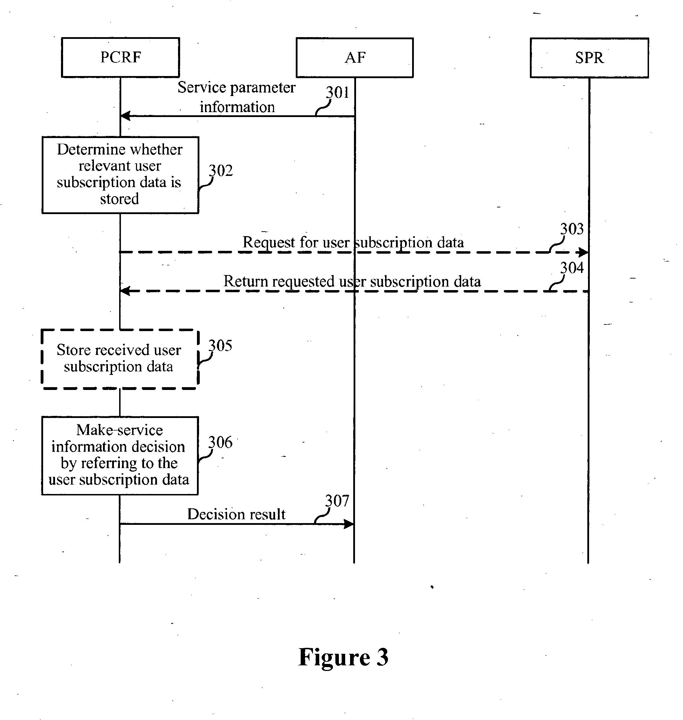

A service information decision method in a mobile communication system according to a second embodiment of the invention is illustrated in Figure 3. The method specifically includes the following steps.

In step 301, the AF transmits to the PCRF a message that carries relevant service parameter information. The relevant service parameter information includes media components description information, relevant policy information, etc. Specifically, the media components description information further includes a media type, a bandwidth demand, a flow identifier, etc. Additionally, this message can also carry relevant user identification information, such as International Mobile Station Identity (IMSI) and Mobile Station International Integrated Services Digital Network Number (MSISDN).

In step 302, upon receiving of the relevant service parameter information provided by the AF, the PCRF determines whether there is relevant user subscription data stored locally. If there is no such data and a condition for the PCRF to request to the SPR for the relevant user subscription data holds true, the process goes to the step 303.

If the relevant user subscription data is stored locally in the PCRF (for example, in the case of a renegotiation of media components during a session connection or another session connection initiated by the user) or the condition for the PCRF to request to the SPR for the relevant user subscription data does not hold true, the process directly goes to the step 306.

Specifically, the condition for the PCRF to request to the SPR for the relevant user subscription data refers to that the PCRF is provided with the user identification information required for initiating the request to the SPR, for example an Internet Protocol (IP) address, IMSI and MSISDN of the UE.

Furthermore, if the PCRF receives a user subscription data update message (which is transmitted from the SPR) after the determination that the subscription data for the user is stored locally, the PCRF firstly updates the local user subscription data with the user subscription data in the message, and then uses the updated user subscription data as one of decision reference criteria in a subsequent service information decision.

In step 303, the PCRF transmits to the corresponding SPR a request message (which carries the relevant user identification information) for requesting the relevant user subscription data. The user subscription data includes services available to the user, maximum QoS, relevant charging information, etc.

In step 304, the SPR transmits to the PCRF a response message which may contain the requested user subscription data.

In step 305, the PCRF stores the user subscription data from the SPR upon receiving such information, and the process goes to the step 306.

In step 306, the PCRF uses the relevant user subscription data stored locally as one of reference criteria to make a service information decision, and if there is currently no relevant user subscription data stored locally at the PCRF, the service information decision is made in an existing service information decision mode.

Rreferring to the user subscription data for the decision can avoid the problem in the existing service information decision mechanism, i.e. the PCRF uses the user subscription data only in a data bearer establishment, which may cause the UE to reinitiate a negotiation of service parameter information. Also, the existing service information decision mechanism can be improved and the system performance can be enhanced by using the user subscription data as one of decision criteria in the PCRF.

In step 307, the PCRF returns the result of the service information decision to the AF.

Specifically, message exchanged between the PCRF and the AF may be transmitted through a 3GPP Rx interface, and message exchange between the PCRF and the SPR may be transmitted through a 3GPP Sp interface.

Although the invention has been illustrated and described with reference to the embodiments of the invention, those skilled in the art shall understand that the embodiments may be modified in their forms and details without departing from the invention.

## Claims

1. A service information decision method for a mobile communication system, comprising:
receiving (301), by a policy and charging rules function, service parameter information of a user sent from an application function;
obtaining (302, 303, 304, 305), by the policy and charging rules function,
subscription data of the user; **characterized by** :
deciding (306), by the policy and charging rules function, whether to support the service parameter information of the user provided by the application function by using the user subscription data as one of reference criteria.

2. The service information decision method according to claim 1, wherein the policy and charging rules function obtains the subscription data of the user from a subscription profile repository (303, 304, 305).

3. The service information decision method according to claim 1, wherein the obtaining of the subscription data of the user by the policy and charging rules function comprises:
determining (302) whether the policy and charging rules function has locally stored the subscription data of the user; if yes, using the locally stored subscription data of the user, otherwise obtaining the subscription data of the user by inquiring a user subscription data storage element (303, 304, 305).

4. The service information decision method according to claim 3, wherein the user subscription data storage element is a subscription profile repository.

5. The service information decision method according to claim 1, further comprising:
receiving, by the policy and charging rules function, a user subscription data update message;
updating, by the policy and charging rules function, the user subscription data in the policy and charging rules function with the user subscription data in the user subscription data update message.

6. A service information decision system for a mobile communication system,
comprising: an application function and a policy and charging rules function in communication with said application function, **characterized in that**:
the policy and charging rules function is adapted to receive service parameter information of a user sent from an application function, obtain subscription data of the user and decide whether to support the service parameter information of the user provided by the application function by using the user subscription data as one of reference criteria.

## Patentansprüche

1. Dienstinformations-Entscheidungsverfahren für ein Mobilkommunikationssystem, umfassend:
Empfangen (301) von Dienstparameterinformationen eines Benutzers, die von einer Anwendungsfunktion gesendet werden, durch eine Policy and Charging Rules Function;
Erhalten (302, 303, 304, 305) von Subskriptionsdaten des Benutzers durch die Policy and Charging Rules Function; **gekennzeichnet durch**
Entscheiden (306) **durch** die Policy and Charging Rules Function, ob die **durch** die Anwendungsfunktion bereitgestellten Dienstparameterinformationen des Benutzers zu unterstützen sind, **durch** Verwendung der Benutzersubskriptionsdaten als eines von Referenzkriterien.

2. Dienstinformations-Entscheidungsverfahren nach Anspruch 1, wobei die Policy and Charging Rules Function die Subskriptionsdaten des Benutzers von einem Subskriptionsprofilrepositorium (303, 304, 305) erhält.

3. Dienstinformations-Entscheidungsverfahren nach Anspruch 1, wobei das Erhalten der Subskriptionsdaten des Benutzers durch die Policy and Charging Rules Function Folgendes umfasst:
Bestimmen (302), ob die Policy and Charging Rules Function die Subskriptionsdaten des Benutzers lokal gespeichert hat; wenn ja, Verwenden der lokal gespeicherten Subskriptionsdaten des Benutzers, andernfalls Erhalten der Subskriptionsdaten des Benutzers durch Abfragen eines Benutzersubskriptionsdaten-Speicherelements (303, 304, 305).

4. Dienstinformations-Entscheidungsverfahren nach Anspruch 3, wobei das Benutzersubskriptionsdaten-Speicherelement ein Subskriptionsprofilrepositorium ist.

5. Dienstinformations-Entscheidungsverfahren nach Anspruch 1, ferner umfassend:
Empfangen einer Benutzersubskriptionsdaten-Aktualisierungsnachricht durch die Policy and Charging Rules Function;
Aktualisieren der Benutzersubskriptionsdaten in der Policy and Charging Rules Function durch die Policy and Charging Rules Function mit den Benutzersubskriptionsdaten in der Benutzersubskriptionsdaten-Aktualisierungsnachricht.

6. Dienstinformationsentscheidungssystem für ein Mobilkommunikationssystem, umfassend: eine Anwendungsfunktion und eine Policy and Charging Rules Function in Kommunikation mit der Anwendungsfunktion, **dadurch gekennzeichnet, dass** die Policy and Charging Rules Function dafür ausgelegt ist, von einer Anwendungsfunktion gesendete Dienstparameterinformationen eines Benutzers zu empfangen, Subskriptionsdaten des Benutzers zu erhalten und durch Verwendung der Benutzersubskriptionsdaten als eines von Referenzkriterien zu entscheiden, ob die durch die Anwendungsfunktion bereitgestellten Dienstparameterinformationen des Benutzers zu unterstützen sind.

## Revendications

1. Procédé de décision d'informations de service pour un système de communication mobile, comprenant :
la réception (301), par une fonction de politique et règles de facturation,
d'informations de paramètres de service d'un utilisateur envoyées par une fonction d'application ;
l'obtention (302, 303, 304, 305), par la fonction de politique et règles de facturation,
de données d'abonnement de l'utilisateur ; **caractérisé par** :
la décision (306), par la fonction de politique et règles de facturation, qu'il convient ou non de supporter les informations de paramètres de service de l'utilisateur fournies par la fonction d'application en utilisant les données d'abonnement d'utilisateur comme l'un de critères de référence.

2. Procédé de décision d'informations de service selon la revendication 1, dans lequel la fonction de politique et règles de facturation obtient les données d'abonnement de l'utilisateur à partir d'un gisement de profils d'abonnement (303, 304, 305).

3. Procédé de décision d'informations de service selon la revendication 1, dans lequel l'obtention des données d'abonnement de l'utilisateur par la fonction de politique et règles de facturation comprend :
la détermination (302) que la fonction de politique et règles de facturation a ou non mémorisé localement les données d'abonnement de l'utilisateur ; dans l'affirmative,
l'utilisation des données d'abonnement mémorisées localement de l'utilisateur, dans la négative, l'obtention des données d'abonnement de l'utilisateur en interrogeant un élément de mémorisation de données d'abonnement d'utilisateur (303, 304, 305).

4. Procédé de décision d'informations de service selon la revendication 3, dans lequel l'élément de mémorisation de données d'abonnement d'utilisateur est un gisement de profils d'abonnement.

5. Procédé de décision d'informations de service selon la revendication 1, comprenant en outre :
la réception, par la fonction de politique et règles de facturation, d'un message d'actualisation de données d'abonnement d'utilisateur ;
l'actualisation, par la fonction de politique et règles de facturation, des données d'abonnement d'utilisateur dans la fonction de politique et règles de facturation avec les données d'abonnement d'utilisateur dans le message d'actualisation de données d'abonnement d'utilisateur.

6. Système de décision d'informations de service pour un système de communication mobile, comprenant, une fonction d'application et une fonction de politique et règles de facturation en communication avec ladite fonction d'application, **caractérisé en ce que** :
la fonction de politique et règles de facturation est adaptée pour recevoir des informations de paramètres de service d'un utilisateur envoyées par une fonction d'application, obtenir des données d'abonnement de l'utilisateur et décider qu'il convient ou non de supporter les informations de paramètres de service de l'utilisateur fournies par la fonction d'application en utilisant les données d'abonnement d'utilisateur comme l'un de critères de référence.
